# DEMANDE DE BREVET EUROPEEN

(11) **EP 1 302 676 A1**
(43) Date de publication de la demande: **16.04.2003**
(21) Numéro de dépôt: 02292495.5
(22) Date de dépôt: 10.10.2002
(51) Int. Cl.: F16B 17/00, F16B 7/20

(54) **Ensemble de fixation a rampe helicoidale**

(30) Priorité: 12.10.2001 FR 0113182
(71) Demandeur: Faurecia Interieur Industrie, 92000 Nanterre (FR)
(72) Inventeur: Brancheriau, Christian, c/o Faurecia Interieur, 60110 Meru (FR)
(74) Mandataire: Lerner, François

(57) **Abrégé**

Ensemble comprenant deux pièces à assembler, un pion sensiblement cylindrique (6), une bague (8) comprenant au moins un ergot (28), un support (12), des moyens de guidage en rotation (14) de la bague par rapport au support, et des moyens élastiques (14) liés d'une part à la bague et d'autre part au support. L'ensemble comprend en outre au moins une rampe hélicoïdale (26) ménagée sur la surface périphérique du pion et destinée à recevoir un ergot, ladite rampe hélicoïdale comprenant une première partie (30) et une deuxième partie (32) présentant des sens d'hélice opposés.

## Description

L'invention concerne un ensemble comprenant deux pièces à assembler. Elle vise en particulier à simplifier l'opération de fixation de ces deux pièces ensemble.

L'invention trouve en particulier son application dans le domaine de l'automobile lors de l'habillage de l'habitacle du véhicule, notamment lors du montage de la planche de bord sur la structure du véhicule.

Pour fixer deux pièces, il est bien connu d'utiliser des vis d'assemblage. Toutefois, il est parfois nécessaire d'aller placer ces vis dans des endroits difficilement accessibles. Les opérations consistant à maintenir la vis et à la visser lors du montage tout en maintenant les pièces à assembler, ou à dévisser la vis et à la récupérer s'avèrent alors souvent délicates.

Il est également bien connu de fixer des pièces au moyen d'agrafes. Cette solution permet de fixer rapidement les pièces. Toutefois, la fixation obtenue ne présente qu'une résistante mécanique faible et le démontage se traduit bien souvent par la rupture de l'agrafe.

Par ailleurs, US-A-5 178 504 décrit un dispositif de fixation rapide comprenant :
- une première et une deuxième pièces à fixer ensemble,
- un ensemble de fixation comprenant :
   - un premier et un deuxième éléments de fixation destinés à s'engager l'un dans l'autre suivant une direction d'engagement entre une position d'engagement et une position assemblée, ledit premier élément étant lié à la première pièce et lesdits éléments étant constitués :
      ◆ l'un par un pion sensiblement cylindrique et sensiblement de section tranversale circulaire, muni d'au moins une rainure s'étendant sensiblement suivant ladite direction d'engagement entre une première et une deuxième extrémités, ladite rainure présentant une première rampe hélicoïdale s'étendant dans un premier sens entre la première extrémité et une première extrémité intermédiaire, et
      ◆ l'autre par une bague tubulaire réservant un passage destiné à recevoir le pion, ladite bague comprenant au moins un ergot faisant saillie à l'intérieur dudit passage, ledit ergot étant destiné à s'insérer dans ladite rainure pour y coulisser,
   - des moyens de guidage en rotation du deuxième élément par rapport à la deuxième pièce, et
   - des moyens élastiques liés d'une part au deuxième élément et d'autre part à la deuxième pièce.

Toutefois, un tel ensemble, lorsqu'il est soumis à des vibrations, notamment lorsqu'il est utilisé sur un véhicule automobile, autorise des déplacements entre les pièces fixées l'une à l'autre qui sont certes de faible amplitude mais génèrent malgré tout du bruit.

Pour remédier à ces inconvénients, l'invention propose que :
- ladite rainure comprenne une deuxième rampe hélicoïdale s'étendant dans un deuxième sens qui est opposé au premier sens, entre une deuxième extrémité intermédiaire et la deuxième extrémité,
- en position assemblée, l'ergot est disposé dans la rainure entre la deuxième extrémité intermédiaire et la deuxième extrémité, et
- la première et la deuxième pièces sont pressées l'une contre l'autre sous l'action des moyens élastiques.

Ainsi, pour fixer les première et deuxième pièces et les maintenir en pression l'une contre l'autre, il suffit de les rapprocher l'une de l'autre. Lorsque l'ergot décrit la première partie de la rampe hélicoïdale les moyens élastiques sont comprimés. Puis, lorsque l'ergot est dans la deuxième partie de la rampe hélicoïdale, les moyens élastiques exercent un effort tendant à rapprocher les deux pièces. Ces dites pièces étant pressées l'une contre l'autre, elles ont moins tendance à se déplacer, de sorte que l'on obtient ainsi une fixation générant peu de bruits et de vibrations entre les pièces.

Avantageusement, afin de réduire encore les vibrations entre lesdites pièces, l'invention propose que la première et la deuxième pièces présentent, pour l'une, une nervure de section conique ou tronconique entourant le premier élément et, pour l'autre, une rainure de forme complémentaire recevant ladite nervure.

La coopération entre la nervure et la rainure empêche tout déplacement relatif des pièces suivant leur plan de contact.

Selon une autre caractéristique, l'invention propose pour faciliter l'engagement des premier et deuxième éléments l'un dans l'autre, tout en les maintenant fortement pressés en position assemblée, que la deuxième rampe présente un pas inférieur au pas de la première rampe.

Ainsi, l'effort nécessaire pour engager les pièces l'une dans l'autre sera inférieur à l'effort s'exerçant entre les pièces en position assemblée.

Selon une autre caractéristique avantageuse, l'invention propose pour constituer les moyens élastiques que l'ensemble comprenne des ailettes en matériau élastiquement étirable liés d'une part au deuxième élément et d'autre part à la deuxième pièce.

La réalisation, le montage et le recyclage de l'ensemble étant ainsi facilités, son coût sera réduit.

Afin de faciliter le démontage des première et deuxième pièces, l'invention propose que le dispositif comprenne en outre un outil de démontage présentant une partie tubulaire s'étendant suivant une direction d'allongement et au moins deux doigts s'étendant suivant la direction longitudinale à l'extrémité de la partie tubulaire.

L'invention va apparaître encore plus clairement dans la description qui va suivre, faite en référence aux dessins annexés dans lesquels :
- la figure 1 est une vue en coupe transversale d'un ensemble conforme à l'invention en position d'engagement,
- la figure 2 est une vue en coupe selon la ligne repérée II-II à la figure 1,
- la figure 3 est une vue de l'ensemble de la figure 1, en position assemblée,
- la figure 4 est une vue en coupe selon la ligne repérée IV-IV à la figure 3,
- la figure 5 est une vue partielle en perspective suivant la flèche repérée V sur la figure 3,
- la figure 6 illustre une variante de réalisation, conformément à la figure 3.

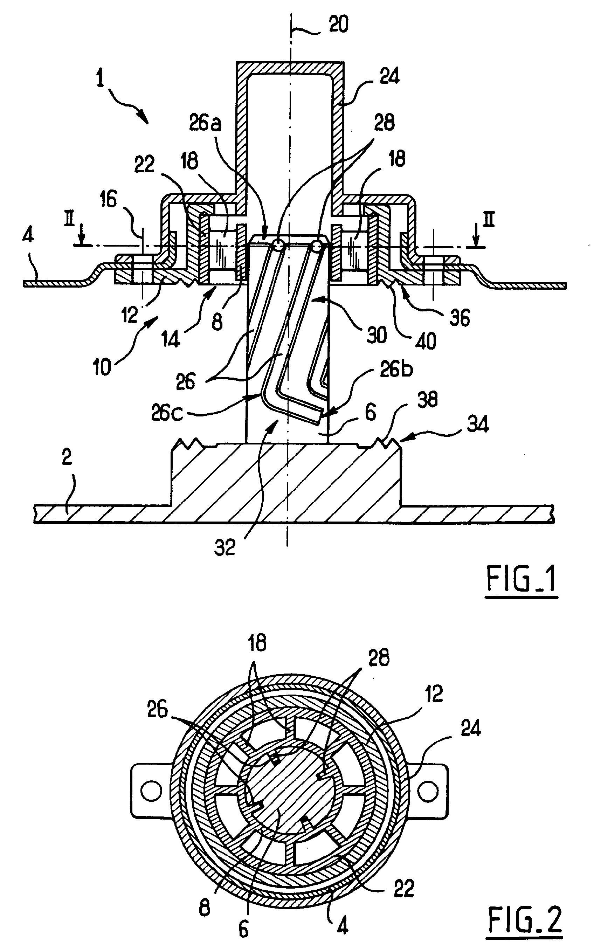

Les figures 1 à 4 illustrent un ensemble 1 comprenant essentiellement un élément structurel de planche de bord, ici un conduit aéraulique 2, un élément structurel de véhicule, ici une traverse inférieure de baie 4 et des moyens de fixation 10 pour fixer l'élément structurel de planche de bord sur l'élément structurel de véhicule.

Lesdits moyens de fixation 10 présentent une direction d'engagement 20 et comprennent un pion 6, ici obtenu de matière avec le conduit aéraulique, un support 12 fixé à la traverse inférieure de baie 4 par des vis (dont la présence est symbolisée par un trait d'axe 16), une bague 8, des moyens élastiques de guidage en rotation 14 interposés entre la bague 8 et le support 12.

L'ensemble 1 comprend en outre un capot de protection 24 fixé sur le support 12 par l'intermédiaire des vis 16.

La bague 8 est sensiblement tubulaire et présente une surface intérieure sensiblement cylindrique de section circulaire présentant un axe d'allongement s'étendant sensiblement suivant la direction d'engagement 20. Elle comporte des ergots 28, ici au nombre de quatre répartis régulièrement suivant un décalage angulaire de 90 degrés, venant en saillie sur sa surface intérieure.

Les moyens élastiques de guidage en rotation 14 comprennent des ailettes 18 et un manchon intermédiaire 22 qui est soudé sur le support 12. Les ailettes sont en matériau élastiquement étirable tel que du polyoxyméthylène, polyacétal, polyformaldéhyde (POM) ou du polypropylène (PP). Elles sont obtenues de matière avec la bague 8 et avec le manchon intermédiaire 22. Elles assurent en outre le guidage en rotation de la bague 8 par rapport au support 12 autour de la direction d'allongement de la bague 8.

Le pion 6 est cylindrique de section sensiblement circulaire et présente un axe d'allongement s'étendant sensiblement suivant la direction d'engagement 20. Il comporte sur sa surface périphérique extérieure des rainures hélicoïdales 26, ici au nombre de quatre décalées angulairement de 90 degrés et s'étendant entre une extrémité d'engagement 26a et une extrémité terminale 26b.

Chacune de ces rainures hélicoïdales 26 est destinée à recevoir l'un des ergots 28 et est constituée d'une première rampe 30 s'étendant entre l'extrémité d'engagement 26a et une extrémité intermédiaire 26c, et une deuxième rampe 32 s'étendant entre l'extrémité intermédiaire 26c et l'extrémité terminale 26b. Les première 30 et deuxième 32 rampes s'étendent bout à bout suivant la direction d'allongement du pion 6 dans des sens d'hélice opposés. Autrement dit elles sont de pas opposés, ici la première rampe 30 présente un pas à droite et la deuxième rampe 32 présente un pas à gauche.

En outre, en valeur absolue, le pas de la première rampe est supérieur au pas de la deuxième rampe.

Pour fixer le conduit aéraulique 2 sur la traverse inférieure de baie 4, on positionne une planche de bord intégrant le conduit aéraulique 2 par rapport à une structure de véhicule intégrant la traverse inférieure de baie 4 jusqu'à amener le pion 6 par rapport à la bague 8 dans une position d'engagement illustrée aux figures 1 et 2, dans laquelle les ergots sont disposés à l'extrémité d'engagement 26a des rainures hélicoïdales 26.

Ensuite, on déplace la planche de bord par rapport à la structure du véhicule et en particulier le conduit aéraulique 2 par rapport à la traverse inférieure de baie suivant la direction d'engagement 20.

Les ergots 28 guidés le long des rainures hélicoïdales 26 font tourner la bague 8, ce qui étire les ailettes 18. Lors du déplacement des ergots le long de la première rampe 30, depuis l'extrémité d'engagement 26a jusqu'à l'extrémité intermédiaire 26c, la bague 8 tourne depuis une position initiale correspondant à l'étirement minimal (en particulier une absence d'étirement) des aillettes 18 jusqu'à une position extrême correspondant à l'étirement maximal des ailettes 18.

Tant que les ergots 28 sont dans la première rampe 30, les moyens élastiques de guidage en rotation 14 tendent à écarter le conduit aéraulique 2 de la traverse inférieure de baie 4. Puis, au-delà de l'extrémité intermédiaire 26c, lorsque les ergots 28 sont dans la deuxième rampe 32, en se détendant les moyens élastiques de guidage en rotation 14 exercent un effort tendant à amener le conduit aéraulique 2 au contact de la traverse inférieure de baie du fait que le pas de cette deuxième rampe 32 est opposé à celui de la première rampe 30.

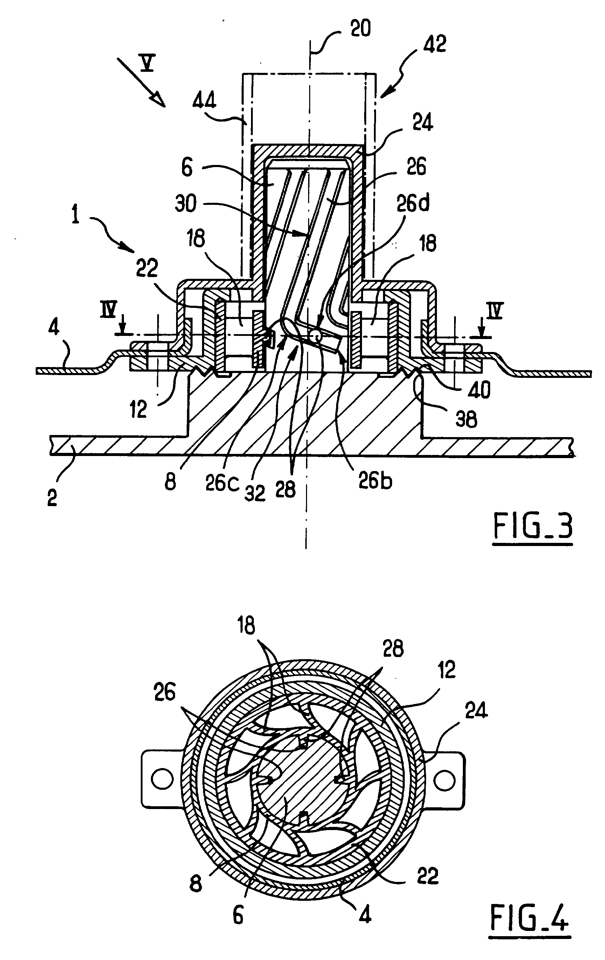

Lors du parcours de la deuxième rampe 32, les ergots 28 passent de l'extrémité intermédiaire 26c à une position de fixation 26d, disposée entre l'extrémité intermédiaire 26c et l'extrémité terminale 26b, à l'écart de l'extrémité terminale 26b. En effet, le conduit aéraulique 2 par l'intermédiaire d'une surface d'appui 34 vient en butée sur une surface de base 36 du support 12, dans la position de fixation illustrée aux figures 3 et 4, avant que les ergots n'atteignent l'extrémité terminale 26b.

Dans cette position, la bague occupe une position angulaire comprise entre celle correspondant à l'extrémité intermédiaire 26c et celle correspondant à l'extrémité d'engagement 26a. Ainsi, les ailettes 18 étant étirées lorsque l'ensemble est dans la position de fixation, les moyens élastiques de guidage en rotation 14 maintiennent sous pression le conduit aéraulique 2 contre la traverse inférieure de baie 4, de sorte qu'il ne risque pas d'y avoir de déplacement relatif entre le conduit aéraulique 2 et la traverse inférieure de baie suivant la direction d'engagement 20.

En outre, la surface d'appui 34 présente en périphérie du pion 6, tout autour de celui-ci, deux nervures de section transversale conique 38 s'insérant dans des rainures 40 de forme complémentaire ménagées sur la surface de base 36 du support 12, de sorte qu'il ne risque pas d'y avoir de déplacement relatif (vibration) entre le conduit aéraulique 2 et la traverse inférieure de baie suivant une direction transversale à la direction d'engagement 20.

La seule mobilité possible entre le conduit aéraulique 2 et la traverse inférieure de baie consiste donc en une rotation autour de la direction d'engagement 20. Pour l'empêcher, il suffit de prévoir des moyens de fixation complémentaires, éventuellement identiques aux moyens de fixation 10, entre le conduit aéraulique 2 et la traverse inférieure de baie 4.

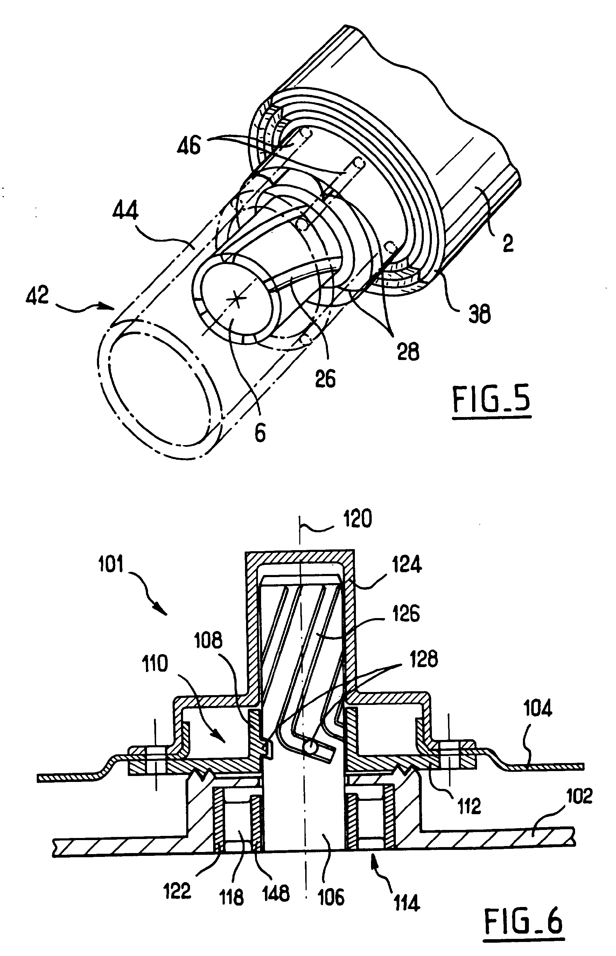

Pour démonter la planche de bord et donc le conduit aéraulique 2, l'ensemble comprend en outre un outil de démontage 42. Tel qu'illustré à la figure 5, cet outil de démontage comporte une partie principale tubulaire 44 destinée à venir autour du pion 6, après avoir retiré le capot de protection 24, présentant une direction d'allongement et se terminant par des tiges cylindriques 46 formant des doigts, ici quatre, disposés dans le prolongement de la partie principale 44 suivant la direction d'allongement et destinées à s'insérer entre les ailettes 18.

Lorsque les tiges cylindriques 46 de l'outil de démontage 42 sont insérées entre les ailettes 18, en faisant tourner l'outil de démontage 42, on provoque une rotation de la bague 8. Après avoir amené les ergots 28 à l'extrémité intermédiaire 26c avec l'outil de démontage 42, lorsque lesdits ergots se trouvent dans la première rampe, les moyens élastiques de guidage en rotation 14 tendent alors à écarter le conduit aéraulique de la traverse inférieure de baie et donc à libérer le conduit aéraulique.

Le conduit aéraulique 2 et le pion 6 seront avantageusement en matière plastique renforcée, tel que du polypropylène chargé de fibres de verre (PPGFL).

La figure 6 illustre un ensemble 101 se différenciant essentiellement de l'ensemble 1 par une inversion de structure. Les éléments de l'ensemble 101 correspondant à ceux de l'ensemble 1 ont un repère augmenté de 100.

La bague portant les ergots 128 est solidaire du support 112 lui-même fixé à l'élément structurel du véhicule 104, tandis que les moyens élastiques 114 sont interposés entre le pion 106 et l'élément structurel de planche de bord 102 qui ne remplit plus ici la fonction de conduit aéraulique. Ici, les moyens élastiques 114 comprennent, outre le manchon intermédiaire 122 et les ailettes 118, un manchon intérieur 148 fixé sur le pion 106. Le manchon intermédiaire 122 est soudé sur l'élément structurel 102. Les ailettes 118 sont interposées entre le manchon intérieur 148 et le manchon intermédiaire 122.

Ainsi, le pion 106 muni de ses rainures 126 est désormais monté pivotant autour de la direction d'engagement 120, alors que les ergots 128 sont immobiles.

Bien entendu, l'invention n'est nullement limitée à la réalisation qui vient d'être décrite à titre d'exemple non limitatif. Ainsi, on pourrait remplacer les moyens élastiques de guidage en rotation 14 par des moyens de guidage en rotation classiques tels qu'un roulement à bille et des moyens élastiques classiques tels qu'un ressort à spirales.

En outre, tout ou partie de l'ensemble pourrait être réalisé en matériau(x) métallique(s), dans la mesure où ce(s) matériau(x) présente(nt) des propriétés mécaniques satisfaisantes, en particulier un allongement élastique suffisant pour ce qui concerne les ailettes.

## Revendications

1. Ensemble (1, 101) comprenant :
- une première (2, 104) et une deuxième (4, 102) pièces à fixer ensemble,
- un ensemble de fixation (10,110) comprenant :
• un premier (6, 108) et un deuxième (8, 106) éléments de fixation destinés à s'engager l'un dans l'autre suivant une direction d'engagement (20, 120) entre une position d'engagement et une position assemblée, ledit premier élément étant lié à la première pièce et lesdits éléments étant constitués :
◆ l'un par un pion (6, 106) sensiblement cylindrique et sensiblement de section transversale circulaire, muni d'au moins une rainure (26, 126) s'étendant sensiblement suivant ladite direction d'engagement entre une première (26a) et une deuxième (26b) extrémités, ladite rainure présentant une première rampe hélicoïdale (30) s'étendant dans un premier sens entre ladite première extrémité et une première extrémité intermédiaire (26c), et
◆ l'autre par une bague (8, 108) tubulaire réservant un passage destiné à recevoir le pion, ladite bague comprenant au moins un ergot (28, 128) faisant saillie à l'intérieur dudit passage, ledit ergot étant destiné à s'insérer dans ladite rainure pour y coulisser,
• des moyens de guidage en rotation (14, 114) du deuxième élément par rapport à la deuxième pièce,
• des moyens élastiques (14, 114) liés d'une part au deuxième élément et d'autre part à la deuxième pièce,
**caractérisé en ce que** :
- ladite rainure comprend une deuxième rampe hélicoïdale (32) s'étendant dans un deuxième sens qui est opposé au premier sens, entre une deuxième extrémité intermédiaire (26c) et la deuxième extrémité (26b),
- en position assemblée, l'ergot est disposé dans la rainure entre la deuxième extrémité intermédiaire (26c) et la deuxième extrémité (26b), et
- la première et la deuxième pièces sont pressées l'une contre l'autre sous l'action des moyens élastiques.

2. Ensemble selon la revendication 1, **caractérisé en ce que** la première et la deuxième pièces présentent l'une une nervure (38) de section conique ou tronconique entourant le premier élément et l'autre une rainure (40) de forme complémentaire recevant ladite nervure.

3. Ensemble selon la revendication 1 ou la revendication 2, **caractérisé en ce que** la deuxième rampe (32) présente un pas inférieur au pas de la première rampe (30).

4. Ensemble selon l'une quelconque des revendications précédentes, **caractérisé en ce qu'**il comprend des ailettes (18, 118) en matériau élastiquement étirable liés d'une part au deuxième élément (8, 106) et d'autre part à la deuxième pièce (4, 102).

5. Ensemble selon la revendication 4, **caractérisé en ce que** les moyens de guidage en rotation comprennent lesdites ailettes.

6. Ensemble selon l'une quelconque des revendications précédentes, **caractérisé en ce qu'**il comprend en outre un outil de démontage (42) présentant une partie tubulaire (44) s'étendant suivant une direction d'allongement et au moins deux doigts (46) s'étendant dans le prolongement de la partie tubulaire suivant la direction d'allongement.

7. Ensemble selon l'une quelconque des revendications précédentes, **caractérisé en ce que** ledit premier élément est défini par le pion (6) et ledit second élément est défini par la bague (8).

8. Ensemble selon l'une quelconque des revendications précédentes, **caractérisé en ce que** ledit premier élément est défini par la bague (108) et ledit second élément est défini par le pion (106).

9. Ensemble selon l'une quelconque des revendications précédentes, **caractérisé en ce que** lesdites première extrémité intermédiaire (26c) et deuxième extrémité intermédiaire (26c) sont confondues, de sorte que la première rampe hélicoïdale et la deuxième rampe hélicoïdale sont disposées bout à bout.
